# FASCICULE DE BREVET EUROPEEN

(11) **EP 2 766 769 B1**
(45) Date de publication et mention de la délivrance du brevet: **23.08.2017**
(21) Numéro de dépôt: 12806521.6
(22) Date de dépôt: 10.10.2012
(51) Int. Cl.: G02F 1/133, G02F 1/1335, G06F 3/041, G02F 1/1333, G02B 27/22

(54) **DISPOSITIF D'AFFICHAGE COMPRENANT UNE SURFACE MULTIFONCTIONNELLE ET COMMUNICANTE**
ANZEIGEVORRICHTUNG MULTIFUNKTIONELLER KOMMUNIKATIONSOBERFLÄCHE
DISPLAY DEVICE INCLUDING A MULTIFUNCTIONAL AND COMMUNICATING SURFACE

(30) Priorité: 11.10.2011 FR 1103098
(43) Date de publication de la demande: 20.08.2014
(73) Titulaire: Sunpartner Technologies, 13090 Aix-en-Provence (FR)
(72) Inventeur: GILBERT, Joël, 13510 Eguilles (FR)
(74) Mandataire: Nicolle, Olivier
(86) Numéro de dépôt international: PCT/FR2012/000409
(87) Numéro de publication internationale: WO 2013/054010

(56) Documents cités:
- WO-A1-2011/004841
- FR-A1- 2 890 181
- US-A1- 2005 122 465
- US-A1- 2006 125 977

## Description

La présente invention se rapporte aux dispositifs d'affichage et plus particulièrement aux images interactives et aux écrans d'affichage tels que ceux des téléphones mobiles, ordinateurs, dispositifs de localisation GPS, tablettes de communication, journaux électroniques, publicités urbaines, sans que cette liste ne soit limitative.

### ETAT DE LA TECHNIQUE

La communication entre, par exemple, un dispositif pourvu d'un écran d'affichage et un utilisateur peut traditionnellement se faire par une interface de type clavier manuel, souris électronique, manettes de jeux, support tactile, microphone, capteur physique ou chimique, y compris la communication par ondes radio ou par infrarouge.

Mais de plus en plus souvent, du point de vue de l'usage fait par l'utilisateur, il s'agit d'optimiser la taille de l'écran d'un dispositif, notamment en ce qui concerne les téléphones mobiles, tout en réduisant au minimum la taille et l'impact visuel des composants assurant d'autres fonctions que celle d'affichage.

Cette évolution a été particulièrement perceptible ces dernières années dans le domaine de la téléphonie mobile, les claviers à touches d'un grand nombre de téléphones mobiles haut de gamme, dits « smart phones » en terminologie anglo-saxonne, ayant été purement et simplement remplacés par des écrans tactiles intégrant la fonction du clavier traditionnel dans l'écran lui-même.

Cette intégration de la fonction du clavier dans l'écran d'un téléphone mobile ou analogue, pose une première série de problèmes lorsqu'elle est réalisée selon les techniques les plus utilisées pour la réalisation d'écrans tactiles.

En effet, l'intégration de capteurs tactiles en surface d'une image et plus spécialement en surface d'un écran d'affichage nécessite en l'état actuel de la technique, que ces capteurs soient transparents de manière à ce que la qualité de l'image soit peu ou pas détériorée. De tels capteurs tactiles transparents sont ainsi couramment intégrés en surface des écrans d'affichage d'ordinateurs, de téléphones, de dispositifs pourvus de la fonction GPS (« Global Positionning System »), ou de téléviseurs.

Ces capteurs tactiles transparents sont réalisables avec différentes technologies, mais la couche active d'une dalle tactile est aujourd'hui le plus généralement réalisée en TCO (Oxyde Conducteur Transparent).

Or les matériaux de type TCO, bien qu'ils soient transparents et n'interfèrent donc pas avec l'image affichée sur l'écran, ne sont pas très bon conducteurs de l'électricité, ce qui gêne la qualité de la détection des contacts sur l'écran.

En outre, le coût des matériaux TCO transparents reste élevé et leur disponibilité à l'avenir à des coûts raisonnables ne semble pas garantie, avec des risques de pénurie de TCO sur le marché dans les prochaines années. Il y aurait donc un intérêt à trouver une solution de remplacement pour les matériaux TCO dans le cadre de la réalisation d'écrans tactiles.

Or il apparaît que le coût d'intégration de la fonction tactile dans un écran pourrait être réduit, et l'efficacité de la fonction tactile augmentée, si le réseau des lignes de matériau TCO pouvait être remplacé par des lignes d'un métal très conducteur, puisque les fils métalliques conducteurs ne présentent bien entendu aucun problème de disponibilité. Mais on bute alors sur un problème technique à priori rédhibitoire, puisque les lignes de métal conducteur ne sont pas transparentes. En conséquence, le réseau des lignes de l'écran tactile serait alors visible dans l'image affichée, ce qui serait bien entendu inacceptable.

On voit donc aisément qu'une solution économique susceptible d'utiliser un réseau tactile en matériau conducteur non transparent serait très attractive, notamment pour les fabricants de dalles tactiles à intégrer dans les écrans, à la condition de trouver un moyen innovant pour masquer visuellement un tel réseau tactile non transparent, vis à vis de l'observateur de l'écran d'affichage.

Un tel procédé de masquage serait susceptible de résoudre cette première problématique de réalisation d'écrans tactiles pourvus d'un réseau tactile en fil métallique discrètement intégré dans l'écran.

Bien entendu un tel procédé serait intéressant non seulement pour des téléphones mobiles, mais également pour la réalisation de tout autre dispositif électronique, mobile ou non, pourvu d'un écran tactile.

Une autre problématique complémentaire provient de la taille relative importante des écrans dans la plupart des dispositifs électroniques portables modernes.

En effet, du fait de l'intégration des écrans tactiles dans les écrans, la face avant des appareils concernés est la plupart du temps totalement couverte par l'écran. Ce facteur de forme est de plus en plus important au point de gêner ou de conditionner toute nouvelle intégration matérielle d'une fonction supplémentaire dans l'appareil.

Or il y a justement une tendance allant vers l'intégration de plus en plus de fonctionnalités dans certains appareils portables pourvus d'un écran. C'est en particulier le cas, par exemple, des téléphones mobiles et des tablettes interactives qui, en plus d'un écran, intègrent de plus en plus d'autres technologies matérielles innovantes combinées à de nouvelles applications logicielles. Certaines de ces technologies nécessitent des espaces d'intégration importants, qui viennent donc en conflit avec l'espace dévolu à l'écran.

On citera à titre d'exemple le cas de la technologie dite RFID (Dispositif d'Identification par Radio Fréquence), qui est matérialisée par une antenne connectée à une puce électronique. L'antenne est constituée de spires d'un métal conducteur, généralement au nombre de 2 à 5 spires qui occupent les bords d'un rectangle ou d'un carré suivant le pourtour de l'écran. Or les appareils de communication mobiles comportent par ailleurs déjà une ou plusieurs antennes, et par conséquent l'intégration de la fonctionnalité de communication RFID soulèvera nécessairement la question de la place disponible pour une antenne supplémentaire.

Il en ira de même lorsque des fonctions supplémentaires, autres que la fonction tactile ou la fonction de communication RFID, devront également être intégrées dans des écrans ou des dispositifs d'affichage dans lesquels l'écran ou plus généralement le dispositif d'affichage occupera l'essentiel de la surface.

Il y aura donc de plus en plus un conflit pour l'allocation de surface entre l'écran d'affichage proprement dit, et d'autres fonctions, là encore, à moins de trouver une nouvelle solution technique originale et susceptible de faciliter l'intégration visuellement discrète de ces fonctions supplémentaires dans la surface d'affichage elle-même.

Sur la base des problèmes d'intégration d'un écran tactile ou d'une fonction de communication RFID dans un écran d'affichage, on voit donc qu'on se heurtera de plus en plus à une problématique nouvelle et potentiellement beaucoup plus générale, qui est celle de l'intégration dans un dispositif d'affichage, d'une ou de plusieurs fonctions dont les composants matériels ne sont pas transparents et doivent être intégrés de façon visuellement discrète pour ne pas gêner la visibilité de l'image elle-même sur le dispositif d'affichage.

Cette problématique n'est pas résolue par les techniques aujourd'hui connues.

Par exemple, on connaît de par le document US20120133618A1 un dispositif d'affichage pourvu d'une fonction de capteur tactile. Un film optique est disposé au-dessus d'une dalle LCD pourvue d'une fonction tactile, et ce film comprend en alternance des parties en résine translucide et des parties opaques bloquant la lumière, ce qui permet de mieux discriminer la présence ou l'absence d'un organe de commande placé au-dessus du dispositif. En revanche, rien dans ce document ne décrit ni ne suggère que le film optique pourrait contenir des éléments fonctionnels électriques ou mécaniques, tels que des capteurs ou des transducteurs aménagés de façon invisible dans le film optique.

Il en résulte que toute application ou fonctionnalité qui nécessiterait l'utilisation de la surface de l'écran pour l'intégration d'un matériau non transparent au spectre lumineux visible, ne serait possible qu'à la condition de proposer une innovation substantielle qui permette de rendre peu ou pas visible pour l'observateur, le matériel nécessaire pour la mise en oeuvre de l'application ou de la fonctionnalité ainsi intégrée.

### BUT DE L'INVENTION

Eu égard à ce qui précède, l'invention a pour but général de proposer un dispositif d'affichage susceptible de résoudre les problèmes posés tout en évitant les inconvénients liés à l'état de la technique.

Par conséquent, un but principal de l'invention consiste à intégrer à la surface d'un dispositif d'affichage d'une image, tel que notamment un écran d'affichage électronique, des éléments fonctionnels non transparents mais qui devront rester invisibles ou du moins peu visibles pour l'utilisateur, et qui dégraderont donc peu ou pas la qualité de l'image affichée à l'écran.

Un autre but de l'invention est de proposer un dispositif d'affichage dans lequel cette intégration d'éléments non transparents soit possible avec un faible coût et une grande fiabilité.

Un autre but de l'invention est de proposer un dispositif d'affichage dans lequel une ou plusieurs fonctions supplémentaires pourront être intégrées dans la zone dévolue à l'image, ces fonctions étant indépendantes ou combinées entre elles. Les éléments non transparents ainsi intégrés pourront être par exemple un réseau tactile de fils électriques, une antenne d'émission et/ou de réception d'ondes électromagnétiques, un capteur de température, un capteur d'ondes sonores, un capteur de rayonnements ionisants, un capteur d'objets métalliques, un capteur de champs magnétiques, un capteur biométrique ou autre.

### RESUME DE L'INVENTION

Le principe de l'invention consiste à disposer au-dessus de l'image elle-même, constituée d'une pluralité de pixels, une plaque optique innovante telle que décrite dans les revendications. Selon l'invention, chaque réseau d'éléments fonctionnels correspond à une fonction électronique et/ou mécanique, ce qui a l'avantage de faire coexister plusieurs fonctions électroniques et/ou mécaniques de façon quasi invisible dans un même dispositif d'affichage, en plus des composants nécessaires à l'affichage lui-même.

Bien entendu l'épaisseur du réseau d'éléments fonctionnels dépend de la géométrie et de l'épaisseur du dispositif d'affichage hôte. Il est parfaitement possible d'obtenir des intégrations d'éléments fonctionnels de faible épaisseur, lorsque ceux-ci sont réalisés sous la forme d'une couche mince électronique et/ou mécanique.

Dans le cadre de l'intégration d'éléments électriquement conducteurs pour la réalisation d'un écran pour téléphone mobile par exemple, un réseau d'éléments fonctionnels ayant une épaisseur de quelques centaines de microns est tout à fait envisageable.

Selon un mode de réalisation avantageux, les lentilles de focalisation de la lumière des pixels sont réalisées sous la forme d'un réseau de lentilles, plus particulièrement sous la forme d'un film lenticulaire intégré à la plaque optique.

Selon le mode de réalisation choisi, le film lenticulaire peut être remplacé par un film contenant des formes prismatiques, mais on pourra si nécessaire combiner les deux.

Dans une première variante de réalisation, le film lenticulaire ou prismatique est positionné entre le plan des pixels et la couche mince électronique et/ou mécanique utilisée.

Dans une autre variante de réalisation, le film lenticulaire ou prismatique est situé directement face à l'observateur et donc au-dessus des réseaux de zones de transparence et du réseau d'éléments fonctionnels. Le film fonctionnel contenant les éléments fonctionnels est donc dans ce cas positionné entre les pixels et le film lenticulaire ou prismatique.

Lorsque requis par la fonction à intégrer dans le dispositif d'affichage, les éléments fonctionnels sont non transparents, comme par exemple dans le cas de l'intégration dans un écran d'un réseau tactile constitué par un réseau de fils conducteurs.

Les zones de transparence sont disposées en face des lentilles, celles-ci étant positionnées entre les zones de transparence et les pixels de manière à focaliser la lumière issue d'un ou de plusieurs pixels vers les zones de transparence et à la guider entre les éléments fonctionnels vers l'observateur du dispositif d'affichage.

Alternativement, les éléments fonctionnels non transparents sont espacés par des zones de transparence disposées en face des lentilles, celles-ci étant positionnées au-dessus desdits éléments fonctionnels de manière à guider la lumière issue d'un ou de plusieurs pixels à travers les zones de transparence et les lentilles et à la diriger vers l'observateur du dispositif d'affichage.

Dans un mode de réalisation de l'invention correspondant au problème de l'intégration de la fonction tactile de détection de contact dans un écran, les éléments fonctionnels sont des capteurs de contact, constitués notamment par des fils d'une matière non transparente à la lumière et électriquement conducteurs.

Dans ce cas les fils électriquement conducteurs sont isolés entre eux et sont agencés en un réseau dont les intersections constituent des noeuds capacitifs ou résistifs aptes à former un réseau tactile, de sorte qu'à l'approche d'un doigt ou d'un stylet d'un noeud du réseau, sa position soit repérée sur le dispositif d'affichage.

Dans un mode de réalisation de l'invention correspondant au problème de l'intégration de la fonction de communication électromagnétique, notamment RFID, dans un écran, les éléments fonctionnels sont configurés sous la forme d'une antenne d'émission et/ou de réception d'ondes électromagnétiques, et l'antenne fonctionne alors avec des fréquences qui sont celles des dispositifs de radio identification RFID.

En variante, les éléments fonctionnels sont configurés pour minimiser l'impact des ondes électromagnétiques émises par le téléphone mobile sur la santé du cerveau humain et/ou pour induire des états particuliers de relaxation. A cet effet, les éléments fonctionnels sont réalisés sous la forme d'une antenne d'émission et/ou de réception d'ondes électromagnétiques fonctionnant avec des fréquences électromagnétiques accordées sur les fréquences de fonctionnement du cerveau humain. Ceci permet notamment, dans le cadre de l'intégration dans un écran de téléphone mobile, de minimiser l'impact des ondes électromagnétiques sur la santé du cerveau.

L'antenne d'émission et/ou de réception ainsi réalisée est soit alimentée par une batterie ou une pile photovoltaïque, soit autoalimentée par l'énergie des ondes électromagnétiques qu'elle reçoit.

Dans un mode de réalisation de l'invention correspondant au problème de l'intégration de la fonction de capteur de température dans un dispositif d'affichage, les éléments fonctionnels sont configurés sous la forme d'un capteur de température, et le film fonctionnel comporte alors des thermocouples composés d'au moins deux conducteurs électriques de formules chimiques différentes qui forment au moins deux jonctions entre eux.

Dans un mode de réalisation de l'invention correspondant au problème de l'intégration de la fonction microphone dans un dispositif d'affichage, les éléments fonctionnels sont configurés sous la forme d'un microphone, et le film fonctionnel contient alors des éléments fonctionnels constitués par des films piézoélectriques, qui sont dans ce cas par exemple composés de Titano-Zirconate de Plomb (PZT).

Dans un mode de réalisation de l'invention correspondant au problème de l'intégration dans un dispositif d'affichage de la fonction batterie de stockage d'énergie électrique, le film fonctionnel comporte au moins trois couches minces empilées les unes sur les autres et ayant respectivement la fonction d'anode, de cathode et d'électrolyte solide, cet électrolyte solide contenant de préférence du lithium.

Dans un mode de réalisation de l'invention correspondant au problème de l'intégration dans un dispositif d'affichage de la fonction de détection d'objets métalliques, le film fonctionnel comporte des capteurs inductifs à courants de Foucault composés d'un circuit de fils parcourus par une tension sinusoïdale.

Dans un mode de réalisation de l'invention correspondant au problème de l'intégration dans un dispositif d'affichage de la fonction de détection de rayonnements ionisants, les éléments fonctionnels du film fonctionnel sont des semi-conducteurs en couche mince, dont la ou les jonctions sont polarisées en inverse grâce à un champ électrique appliqué aux bornes. Ces semi-conducteurs étant de préférence du silicium avec adjonction de lithium ou du tellurure de cadmium (CdTe et CdZnTe), ou une zone non dopée insérée entre deux contacts à semi- conducteurs dopée p-i-n, ou une jonction métal - semi-conducteur - métal.

Dans un mode de réalisation de l'invention correspondant au problème de l'intégration dans un dispositif d'affichage de la fonction de détection ou de mesure d'une information biométrique, le film fonctionnel intègre des couches minces qui seront constituées par tout matériau adapté à la détection des grandeurs physiques ou chimiques représentatives de l'information biométrique à détecter ou à mesurer.

Alternativement, on pourra mettre en oeuvre une fonction optique, dans laquelle les éléments fonctionnels seront constitués par un réseau de micro-fibres optiques aptes à capter l'image des empreintes digitales lorsqu'un doigt est posé sur un appareil équipé de cette fonction, comme par exemple un écran de téléphone mobile, un tableau de bord de voiture, un ordinateur, ce qui permettra d'utiliser le dispositif selon l'invention pour l'identification de l'utilisateur et son accès physique ou logique à des dispositifs ou à des informations.

Dans un mode de réalisation de l'invention correspondant au problème de l'intégration dans un dispositif d'affichage de la fonction de création d'un courant électrique d'origine photovoltaïque, on prévoit que le film fonctionnel est constitué par un matériau photovoltaïque.

L'invention n'est pas limitée par la nature des pixels de l'image, ceux-ci sont soit retro éclairés par un dispositif d'éclairage arrière, soit électroluminescents, soit aptes à réfléchir la lumière incidente.

L'invention n'est pas non plus limitée par la forme ou la configuration des lentilles, lorsque des lentilles sont mises en oeuvre. Celles-ci peuvent être convergentes ou divergentes, symétriques ou asymétriques, sphériques ou asphériques, en verre minéral ou en verre organique. Les lentilles peuvent être remplacées par des prismes.

Dans un mode de réalisation avantageux de l'invention, il est prévu d'intégrer simultanément plusieurs fonctions électroniques et/ou mécaniques dans le dispositif d'affichage. Les couches minces du film fonctionnel correspondant aux différentes fonctions sont alors soit disposées les unes à côté des autres, soit se recouvrent ou se chevauchent partiellement, sans toutefois recouvrir les zones de transparence.

L'invention prévoit également que le dispositif d'affichage peut comporter des moyens pour afficher une liste de fonctions disponibles, et une commande pour la sélection par un utilisateur d'une seule fonction dans la liste, ou simultanément de plusieurs fonctions dans la liste. Dans ce cas, il est judicieux que la commande de sélection de fonction utilise la fonction tactile de l'écran.

Quelle que soit la variante de réalisation mise en oeuvre par le dispositif d'affichage, les informations captées ou transmises par les éléments fonctionnels sont soit transmises à l'utilisateur du dispositif d'affichage par un message affiché à l'écran et/ou par l'émission d'une information sonore ou électromagnétique, soit encore stockées dans une mémoire électronique.

L'invention a également pour objet tout appareil ou dispositif électronique pourvu d'un dispositif d'affichage conforme à l'une quelconque des variantes décrites plus haut.

### DESCRIPTION DETAILLEE DE L'INVENTION

L'invention est maintenant décrite plus en détails à l'aide de la description des figures 1 à 6 indexées, dans lesquelles :
- La figure 1 est un schéma en coupe d'un dispositif d'affichage mettant en oeuvre le principe optique de l'invention ;
- La figure 2 illustre en perspective les différentes couches constitutives du dispositif selon l'invention ;
- La figure 3 est un schéma en coupe d'une variante optique du dispositif d'affichage selon l'invention ;
- La figure 4 illustre une forme particulière de couche mince électronique à fonction tactile ;
- La figure 5 illustre une forme particulière de couche mince électronique à fonctions d'antenne d'émission/réception ;
- La figure 6 illustre une forme particulière de combinaisons de plusieurs couches minces électroniques et/ou mécaniques imbriquées.

Le dispositif d'affichage (1) selon l'invention est composé d'une part d'un écran d'affichage (3) dont les pixels (7) sont soit éclairés par la lumière ambiante, ou retro éclairés par un dispositif d'éclairage arrière (2), ou luminescents.

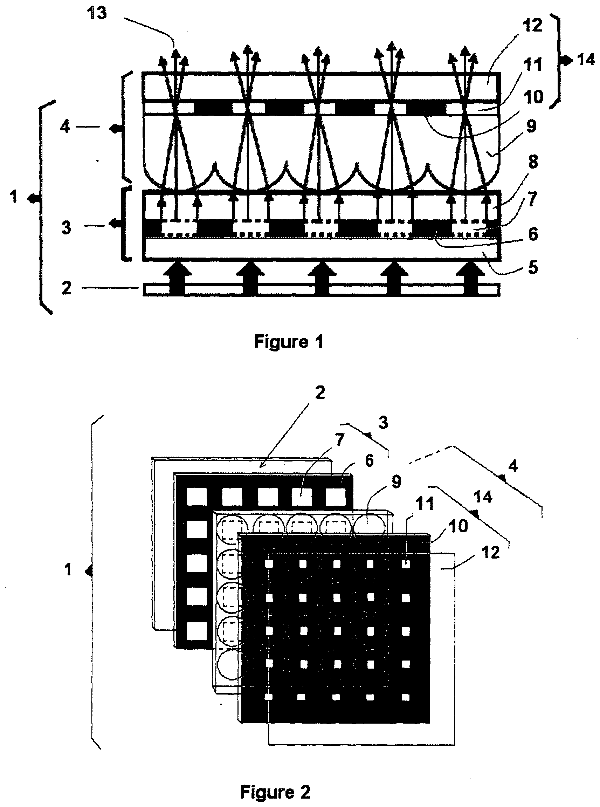

Les figures 1, 2 et 3 illustrent le cas d'une image retro éclairée par un dispositif d'éclairage arrière (2). Dans ce cas l'image est soit en papier ou en polymère transparent ou en cristaux liquides (LCD). Dans le cas des cristaux liquides (LCD) les pixels (7) sont séparés entre eux par des espaces (6) nécessaires au passage des commandes électriques. Les pixels de l'image sont encapsulés entre deux plaques ou films transparents de protection (5 et 8). Le dispositif d'affichage (1) selon l'invention est composé d'autre part d'une plaque optique (4) disposée ou collée à la surface de l'écran (3). Cette plaque est formée idéalement par l'empilement d'au moins deux films (9 et 12).

Le premier film (9) est composé par exemple d'un réseau de lentilles, convergentes ou divergentes, symétriques ou asymétriques, sphériques ou asphériques, en verre minéral ou en verre organique. Ces lentilles ont des dimensions proches de celles des pixels (7) et sont disposées en regard de chaque pixel (7) ou en regard de chaque groupe de pixels de manière à ce que le faisceau de lumière (13) émis par le ou les pixels (7) traverse la lentille et devienne convergent.

Il est à noter que les lentilles et le film lenticulaire (9) peuvent être remplacées par des prismes et un film prismatique, sans sortir du cadre de l'invention. Afin de simplifier l'exposé, on se référera dans la suite de la description à un film lenticulaire, sans que cela n'implique de limitation à la portée de l'invention.

Le deuxième film (12) qui compose la plaque optique (4) est composé d'une matière transparente, en verre minéral ou en verre organique, sur laquelle a été déposée, ou collée, ou gravée une couche mince présentant des zones d'éléments fonctionnels (10) et des zones de transparence (11, de sorte que cette couche mince ne cache pas la totalité du film (12) mais laisse des zones de transparences (11) qui sont positionnées en regard de chaque lentille.

On définit ici le terme « couche mince » par tout matériau pouvant être parcouru par un courant électrique et dont l'épaisseur est inférieure à ses autres dimensions. La fonction de la couche mince dépendra du matériau utilisé et pourra être selon les cas une fonction électronique, voire une fonction mécanique, comme expliqué dans les exemples cités plus loin. Les zones de transparences (11) et les éléments fonctionnels (10) peuvent être de forme quelconque mais forment de préférence un réseau de figures géométriques.

Afin de protéger les éléments fonctionnels (10) de l'air, ils sont positionnés sur la face d'un deuxième film (12), qui est un film de protection transparent tourné vers le film lenticulaire (9).

L'ensemble formé par la couche formée par l'alternance d'éléments fonctionnels (10) et de zones de transparences, et le film de protection (12), sera appelé par convenance le « film fonctionnel », dans la mesure où il contient essentiellement les éléments fonctionnels (10), et repéré par l'indice (14).

Le film lenticulaire (9) et le film fonctionnel (14) sont de préférence collés ensemble avec une colle transparente. Ils sont choisis rigides ou flexibles selon les besoins d'utilisation du dispositif d'affichage (1).

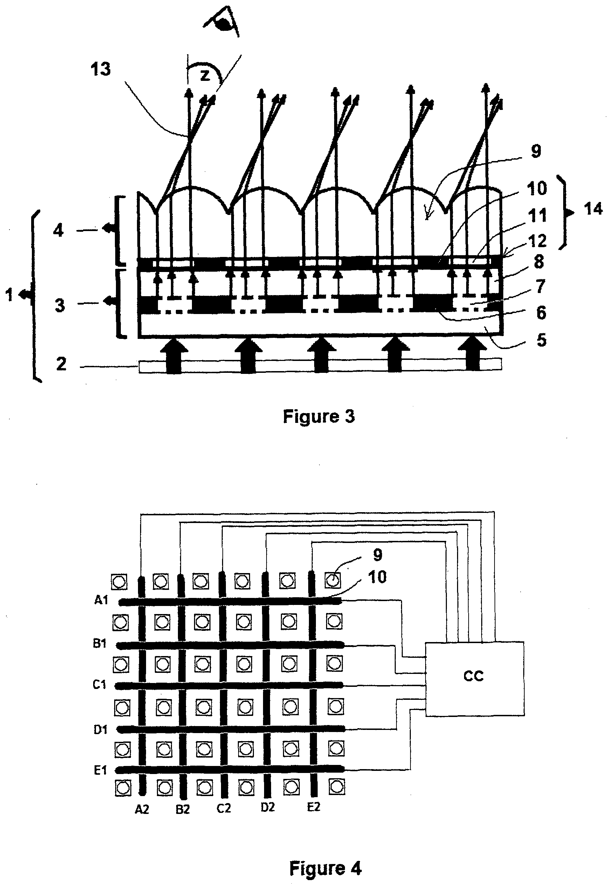

La plaque optique (4) composée des deux films collés (9 et 14) peut, dans une première disposition (Figure 1) avoir son film lenticulaire (9) placé entre l'écran d'affichage (3) et le film fonctionnel (14), soit dans une deuxième disposition (Figure 3) avoir son film fonctionnel (14) placé entre l'écran d'affichage (3) et le film lenticulaire (9).

Dans le cas de la première disposition (Figure 1), les trois composantes principales du dispositif (1) : écran (3), film lenticulaire (9) et film fonctionnel (14), sont telles que la lumière émise par chaque pixel (7) de l'image est déviée au travers d'une lentille du film lenticulaire (9) puis converge vers les zones de transparence (11) du film fonctionnel (14) qui est en surface.

Ainsi l'essentiel de la lumière émise par les pixels sort du dispositif d'affichage (1), bien qu'une partie importante de sa surface soit recouverte par un film fonctionnel (14) contenant des éléments fonctionnels (10) non transparents, ces éléments fonctionnels (10) restant alors non visibles pour l'observateur lorsque la luminosité de l'image est importante, du fait de l'importance du contraste entre la lumière passant à travers les zones de transparence (11) et la faible luminosité des zones intégrant les éléments fonctionnels.

Dans le cas de la deuxième disposition (Figure 3), les trois composantes principales du dispositif (1): écran (3), film lenticulaire (9) et film fonctionnel (14) sont telles que la lumière émise par chaque pixel (7) de l'image passe d'abord par les zones de transparence (11) du film fonctionnel (14), puis est déviée par une lentille du film lenticulaire (9). L'observateur ne verra alors l'image que si son oeil intercepte les rayons (13) sortants dont les angles (z) de sortie ne sont compris qu'entre 0° et Z° par rapport à la perpendiculaire à la plaque optique (4). Pour les autres positions de l'observateur, pour lesquelles l'oeil est positionné au delà de la plage angulaire comprise entre 0° et Z°, l'observateur verra les éléments fonctionnels (10) non transparents du film fonctionnel (14).

La figure 2 est une vue éclatée du dispositif d'affichage suivant la première disposition décrite précédemment (Figure 1). L'écran (3) est composé principalement de pixels (7) et d'espaces inter pixels (6). Un dispositif de retro éclairage (2) projette un faisceau de lumière au travers de chacun des pixels (7). Une plaque optique (4) recouvre l'écran (3) et est composée de deux films : un film lenticulaire (9) et un film fonctionnel (14). Le film fonctionnel (14) contient des éléments fonctionnels (10) non optiques et donc non transparents, et des zones de transparence (11). Ces zones de transparence (11) se positionnent en regard des lentilles du film lenticulaire (9).

Dans le cas de la première disposition (Figure 1) comme dans le cas de la deuxième disposition (Figure 3) les fonctions du film fonctionnel (14) peuvent être multiples. On décrira plus en détail deux exemples éminents, à savoir lorsque les éléments fonctionnels (10) constituent un réseau de capteurs tactiles, et lorsqu'ils constituent une antenne d'émission/réception d'ondes électromagnétiques, sans que cela n'enlève rien à la généralité du concept de l'invention.

La figure 4 est relative à l'exemple de réalisation dans lequel le film fonctionnel (14) a la fonction de capteur tactile.

Les éléments fonctionnels (10) sont composés de deux réseaux de conducteurs électriques. Chacun des réseaux est constitué de conducteurs en bandes parallèles et les conducteurs des deux réseaux sont perpendiculaires entre eux. Les conducteurs sont en aluminium ou en cuivre ou en un autre métal conducteur d'électricité, qui va permettre de rendre l'écran sensible au toucher et permettre de déterminer la position d'un doigt sur l'écran, selon une technique connue en soi. Ces deux réseaux forment un quadrillage qui délimite des zones de transparence placées devant les lentilles du film lenticulaire (9). Les bandes conductrices qui composent donc les éléments fonctionnels (10) sont repérées par leur position en X (A1, B1, C1, D1, E1) sur le premier réseau et leur position en Y (A2, B2, C2, D2, E2) sur le deuxième réseau. Parce que les deux réseaux sont isolés électriquement, chaque intersection de fils forme un noeud capacitif qui est mesuré par un contrôleur (CC). Quand un doigt s'approche ou touche une ou plusieurs intersections de conducteurs, les changements de capacité permettent le calcul de la position du doigt.

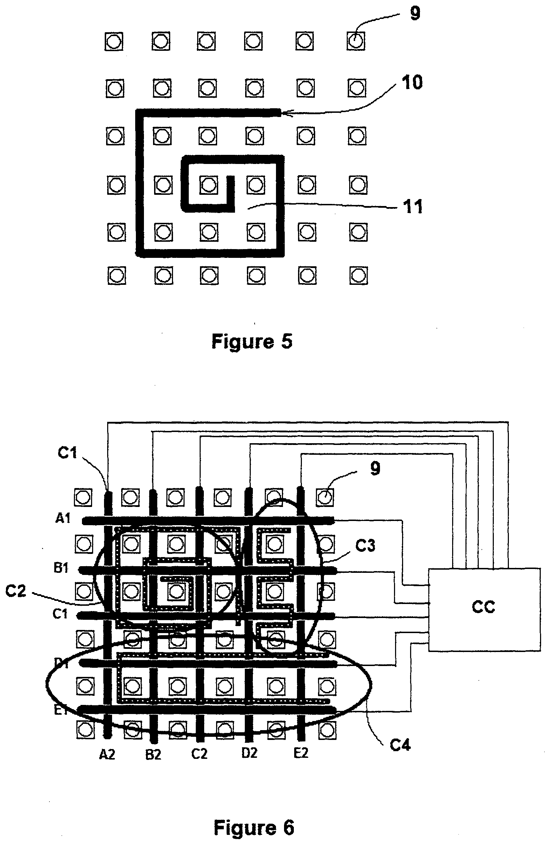

Dans un autre mode de réalisation particulier (figure 5) les éléments fonctionnels (10) ont la fonction d'antenne réceptrice et/ou émettrice d'ondes électromagnétiques. Ils sont configurés sous la forme d'un conducteur électrique plat, par exemple en aluminium, en cuivre, en argent, en or ou en un autre matériau conducteur électrique. La forme de l'antenne est, dans cet exemple non restrictif, en spirale de manière à ce qu'elle réagisse aux fréquences de radio identification RFID. L'élément fonctionnel (10) laisse des espaces de transparence (11) placés devant les lentilles du film lenticulaire (9). De façon connue en soi, l'antenne (10) est reliée à une puce électronique, non illustrée, qui a pour fonction la gestion de l'information reçue ou émise par l'antenne. L'antenne et la puce électronique sont alimentées soit par une batterie, soit par une pile photovoltaïque, non illustrées, soit autoalimentées par l'énergie des ondes radio reçues.

Dans un autre mode de réalisation particulier, les éléments fonctionnels (10) ont une fonction purement mécanique de protection contre les coupures lorsque la plaque optique 4 en face avant de l'afficheur est cassée. Les éléments fonctionnels (10) peuvent à cet effet être constitués de fils ou de bandes métalliques ou non, mais qui résistent à la coupure et qui ont la propriété de maintenir en place les morceaux d'un écran lorsque celui-ci est cassé, ce qui évite à l'utilisateur de se blesser gravement en cas d'accident.

Dans un autre mode de réalisation particulier le film fonctionnel (14) intègre des éléments fonctionnels (10) diversifiés, et le film (14) possède alors plusieurs fonctions. La figure 6 illustre un exemple, non restrictif, dans lequel le film fonctionnel (14) possède quatre types d'éléments fonctionnels réalisés sous la forme de couches minces et repérés sur la figure 6 des zones notées C1, C2, C3, C4 et dont les fonctions sont distinctes. Dans la zone C1, les éléments fonctionnels ont une fonction de reconnaissance tactile et ils sont composés d'un réseau de conducteurs capacitifs qui couvre toute la surface du dispositif d'affichage.

Le réseau de conducteurs capacitifs C1 est composé d'un premier réseau de conducteurs rectilignes et parallèles entre eux (A1, B1, C1, D1, E1) et d'un deuxième réseau de conducteurs rectilignes et parallèles entre eux (A2, B2, C2, D2, E2). Ces deux réseaux sont perpendiculaires entre eux et forment une grille de repères X,Y qui permet la localisation d'un doigt lorsque celui-ci touche la surface du dispositif. Le traitement des signaux électroniques générés par les deux réseaux de conducteurs est géré par un contrôleur électronique (CC).

Les éléments fonctionnels de la zone C2 ont la fonction d'antenne RFID et sont composés d'un fil plat en forme de spirale qui se positionne en partie à côté et en partie par chevauchement sur la grille conductrice C1.

La éléments fonctionnels de la zone C3 sont réalisés sous la forme d'un capteur de température en forme de U dont chaque branche est parallèle à au moins un conducteur appartenant aux éléments fonctionnels C1 ou C2.

Les éléments fonctionnels de la zone C4 sont réalisés sous la forme d'un capteur de vibrations sonores composé de composants piézoélectriques plats en forme de segments mis bout à bout. Ces composants chevauchent en partie les conducteurs de la grille conductrice C1 mais ne chevauchent pas les les conducteurs des zones C2 et C3.

Dans toutes ces configurations géométriques les conducteurs des zones C1, C2, C3, C4 ne recouvrent pas les zones de transparence (11) qui sont traversées par les faisceaux de lumière sortants des pixels et des lentilles (9). La mise en fonctionnement d'une seule fonction au choix ou de plusieurs fonctions au choix et en simultanée peut être commandée par un opérateur qui fera une sélection parmi une liste de possibilités qui s'affichera à l'écran, par exemple l'écran d'un téléphone mobile. Cette sélection pourra par exemple se faire au travers de la fonction écran tactile. Les informations captées par chacune des fonctions seront soit transmises à l'opérateur par un message inscrit sur l'écran et/ou par l'émission d'une information sonore ou électromagnétique, ou bien seront stockées dans une mémoire électronique pour une consultation ultérieure.

On ne décrira pas davantage l'interfaçage du dispositif d'affichage avec les autres composants électroniques ou mécaniques (châssis, carte mère électronique, etc...), d'un appareil électronique intégrant le dispositif d'affichage selon l'invention, ces autres composants dépendant de l'appareil envisagé, et étant connus en soi.

Au-delà des exemples de réalisation décrits en liaison avec les figures, les dispositifs d'affichage selon l'invention peuvent être intégrés dans un grand nombre d'appareils ou de supports, dont on ne donnera que quelques exemples non limitatifs :
- Intégration du dispositif d'affichage dans des tableaux de bord de véhicules (automobile, avion, train,...), notamment pour la mise en oeuvre de fonctions supplémentaires comme la fonction tactile, de reconnaissance vocale, de détection de présence, de paiement à distance (autoroute), de détection de position et de vitesse (GPS).
- Intégration du dispositif d'affichage dans des casques avec visière (pompier, cosmonaute, gendarme, militaire...) : on utilisera les mêmes fonctions que pour les tableaux de bord, avec en plus l'intégration de la fonction de détection de radiations.
- Intégration du dispositif d'affichage dans des vêtements techniques (pompier, gendarme, médecin, technicien,...) : comme ci-dessus, avec en plus l'intégration d'une fonction de mesure de température.
- Intégration du dispositif d'affichage selon l'invention dans des panneaux d'affichage urbain (plan de ville, de métro, carte routière, vitrine de magasin...), avec essentiellement l'intégration d'une fonction tactile.
- Intégration du dispositif d'affichage dans des livres (pour enfants, pour touristes, livres techniques,...) : on pourra utilement intégrer une fonction tactile, une fonction d'électroluminescence, un microphone pour l'interaction audio avec le livre, ainsi qu'une fonction photovoltaïque pour l'alimentation électrique du livre.
- Intégration du dispositif d'affichage dans des décorations ou mobiliers d'intérieur : on mettra alors en oeuvre des fonctions de détection de présence (intrusion), de protection électromagnétique (cage de Faraday), d'antenne de réception (TV, Internet,...), d'émission d'ondes radio calées sur les fréquences cérébrales à des fins de relaxation.
- Intégration du dispositif d'affichage dans des appareils d'identification biométrique.

Nomenclature des références numériques des figures:
1. dispositif d'affichage
2. dispositif de retro éclairage
3. écran
4. plaque optique
5. couche de protection
6. espace inter pixels
7. pixel
8. couche de protection
9. lentille /film lenticulaire
10. élément fonctionnel
11. zone de transparence
12. couche de protection
13. faisceau de lumière émis par le ou les pixels
14. film fonctionnel intégrant les éléments fonctionnels 10

### AVANTAGES DE L'INVENTION

En définitive l'invention répond aux buts fixés. Elle est particulièrement adaptée pour intégrer à la surface d'un dispositif capable d'afficher une image, y compris à la surface des écrans d'affichages électroniques, des composants électroniques ou mécaniques réalisés en couches minces, et qui restent peu ou pas visibles pour l'observateur sans dégrader notablement la qualité de l'image affichée.

Ces couches minces sont alors aptes à former une grande variété d'éléments fonctionnels différents, comme des capteurs ou des transducteurs d'informations ou de grandeurs physiques, comme par exemple un réseau de fils électriques tactile, une antenne d'émission et/ou de réception d'ondes électromagnétiques, un capteur de température ou de lumière ou d'ondes sonores, mais aussi des capteurs de présence de rayonnements ionisants, d'objets métalliques ou de champs magnétiques, ou des transducteurs sonores ou autres.

L'intégration de composants électroniques et/ou mécaniques dans les dispositifs d'affichage selon l'invention rend donc possible de nouveaux moyens de communication avec ces dispositifs d'affichage ou avec des entités qui les intègrent, comme par exemple des téléphones mobiles, des afficheurs publicitaires, ou même des supports muraux ou vitrés.

## Revendications

1. Dispositif d'affichage (1) comprenant une pluralité de pixels (7) formant une image, et une plaque optique (4) disposée en regard de l'image et comportant des zones de transparence (11) configurées pour laisser passer au moins partiellement la lumière issue des pixels (7), ladite plaque optique comportant en outre un réseau de lentilles (9) disposées en regard des pixels (7) de manière à focaliser la lumière émise par les pixels (7) à travers lesdites zones de transparence (11), **caractérisé en ce que** :
- ladite plaque optique (4) comporte en outre au moins un réseau d'éléments fonctionnels (10) non transparents à la lumière visible, réalisés sous la forme de capteurs ou de transducteurs correspondant à une fonction électronique et/ou mécanique, et
- lesdits éléments fonctionnels (10) sont intercalés entre les zones de transparence (11) et disposés de manière que la lumière émise par les pixels (7) est dirigée de manière à traverser les zones de transparence (11) sans intercepter les réseaux d'éléments fonctionnels (10), de façon à rendre lesdits réseaux d'éléments fonctionnels (10) invisibles ou quasi invisibles pour un observateur du dispositif d'affichage (1), bien qu'ils soient non transparents .

2. Dispositif d'affichage (1) selon la revendication 1, **caractérisé en ce que** chaque réseau d'éléments fonctionnels (10) est réalisé sous la forme d'un film fonctionnel électronique et/ou mécanique (14) dont la fonction est mise en oeuvre volontairement par l'utilisateur, ou automatiquement du fait de la réception d'une grandeur physique issue du milieu ou du fait de l'émission d'une grandeur physique vers le milieu.

3. Dispositif d'affichage (1) selon l'une quelconque des revendications précédentes, **caractérisé en ce que** lesdits éléments fonctionnels (10) sont constitués par des capteurs et/ou des transducteurs configurés pour remplir une ou plusieurs des fonctions prises parmi les suivantes :
- la fonction d'antenne d'émission et/ou de réception d'ondes électromagnétiques ;
- la fonction tactile de détection de contact et de positionnement d'un doigt ou d'un stylet à la surface de la plaque optique ;
- la fonction de capteur de température ;
- une fonction de capteur optique apte à rediriger la lumière vers des éléments photovoltaïques ou des moyens de reconnaissance biométrique ;
- la fonction de microphone ;
- la fonction de batterie de stockage d'énergie électrique ;
- la fonction de détection d'objets métalliques ;
- la fonction de détection de rayonnements ionisants ;
- la fonction de détection de champs magnétiques ;

4. Dispositif d'affichage (1) selon la revendication 1, **caractérisé en ce que** le réseau de lentilles (9) de la plaque optique (4) est réalisé sous la forme d'un film lenticulaire (9) positionné entre le plan des pixels (7) et le film fonctionnel (14).

5. Dispositif d'affichage (1) selon la revendication 4, **caractérisé en ce que** le réseau de lentilles (9) de la plaque optique (4) est réalisé sous la forme d'un film lenticulaire (9) et **en ce que** le film fonctionnel (14) pourvu des éléments fonctionnels (10) est positionné entre les pixels (7) et ledit film lenticulaire (9).

6. Dispositif d'affichage (1) selon la revendication 4, **caractérisé en ce que** lesdits éléments fonctionnels (10) sont non transparents et espacés par des zones de transparence (11) disposées en face des lentilles (9), celles-ci étant positionnées entre les zones de transparence (11) et les pixels (7) de manière à focaliser la lumière issue d'un ou de plusieurs pixels (7) vers les zones de transparence (11) et à la guider entre éléments fonctionnels (10) vers l'observateur du dispositif d'affichage.

7. Dispositif d'affichage (1) selon la revendication 4, **caractérisé en ce que** lesdits éléments fonctionnels (10) sont non transparents et espacés par des zones de transparence (11) disposées en face des lentilles (9), celles-ci étant positionnées au-dessus desdits éléments fonctionnels (10) de manière à guider la lumière issue d'un ou de plusieurs pixels (7) à travers les zones de transparence (11) et les lentilles (9) et à la diriger vers l'observateur du dispositif d'affichage.

8. Dispositif d'affichage (1) selon la revendication 3, **caractérisé en ce que** pour réaliser la fonction tactile de détection de contact, les éléments fonctionnels (10) sont des capteurs tactiles constitués par des fils d'une matière non transparente à la lumière et électriquement conducteurs.

9. Dispositif d'affichage (1) selon la revendication 8, **caractérisé en ce que** lesdits fils électriquement conducteurs sont isolés entre eux et sont agencés en un réseau dont les intersections constituent des noeuds capacitifs ou résistifs aptes à former un réseau tactile, de sorte qu'à l'approche d'un doigt ou d'un stylet d'un noeud du réseau, sa position soit repérée sur le dispositif d'affichage.

10. Dispositif d'affichage (1) selon la revendication 3, **caractérisé en ce que** lesdits éléments fonctionnels (10) sont configurés sous la forme d'une antenne d'émission et/ou de réception d'ondes électromagnétiques, et l'antenne fonctionnant avec des fréquences qui sont celles des dispositifs de radio identification RFID.

11. Dispositif d'affichage (1) selon la revendication 3, **caractérisé en ce que** lesdits éléments fonctionnels (10) sont configurés sous la forme d'une antenne d'émission et/ou de réception d'ondes électromagnétiques fonctionnant avec des fréquences électromagnétiques accordées sur les fréquences de fonctionnement du cerveau humain.

12. Dispositif d'affichage (1) selon la revendication 10 ou la revendication 11, **caractérisé en ce que** l'antenne d'émission et/ou de réception est soit alimentée par une batterie ou une pile photovoltaïque, soit autoalimentée par l'énergie des ondes électromagnétiques qu'elle reçoit.

13. Dispositif d'affichage (1) selon la revendication 3, dans lequel lesdits éléments fonctionnels (10) sont configurés sous la forme d'un capteur de température, **caractérisé en ce que** le film fonctionnel (14) comporte des thermocouples composés d'au moins deux conducteurs électriques de formules chimiques différentes qui forment au moins deux jonctions entre eux.

14. Dispositif d'affichage (1) selon la revendication 3, dans lequel lesdits éléments fonctionnels (10) sont configurés sous la forme d'un microphone, **caractérisé en ce que** le film fonctionnel (14) est un film piézoélectrique de préférence composé de Titano-Zirconate de Plomb (PZT).

15. Dispositif d'affichage (1) selon la revendication 3, dans lequel lesdits éléments fonctionnels (10) sont configurés sous la forme d'une batterie de stockage d'énergie électrique, **caractérisé en ce que** le film fonctionnel (14) est composé d'au moins trois couches minces empilées les unes sur les autres et ayant respectivement la fonction d'anode, de cathode et d'électrolyte solide, cet électrolyte solide contenant de préférence du lithium.

16. Dispositif d'affichage (1) selon la revendication 3, dans lequel lesdits éléments fonctionnels (10) sont configurés pour la détection d'objets métalliques, **caractérisé en ce que** le film fonctionnel (14) comporte des capteurs inductifs à courants de Foucault composés d'un circuit de fils parcourus par une tension sinusoïdale.

17. Dispositif d'affichage (1) selon la revendication 3, dans lequel lesdits éléments fonctionnels (10) sont configurés pour la détection de rayonnements ionisants, **caractérisé en ce que** le film fonctionnel (14) comporte des semi-conducteurs dont la ou les jonctions sont polarisées en inverse grâce à un champ électrique appliqué aux bornes, lesdits semi-conducteurs étant de préférence du silicium avec adjonction de lithium ou du tellurure de cadmium (CdTe et CdZnTe), ou une zone non dopée insérée entre deux contacts à semi-conducteurs dopée p-i-n, ou une jonction métal - semi-conducteur - métal.

18. Dispositif d'affichage (1) selon l'une quelconque des revendications précédentes, **caractérisé en ce que** les pixels (7) sont soit retro éclairés par un dispositif d'éclairage arrière (2), soit électroluminescents, soit aptes à réfléchir la lumière incidente.

19. Dispositif d'affichage (1) selon l'une quelconque des revendications 1 ou 4, **caractérisé en ce que** les lentilles (9) sont convergentes ou divergentes, symétriques ou asymétriques, sphériques ou asphériques, en verre minéral ou en verre organique.

20. Dispositif d'affichage (1) selon l'une quelconque des revendications 1 ou 4, **caractérisé en ce que** les lentilles (9) sont remplacées par des prismes.

21. Dispositif d'affichage (1) selon la revendication 2 ou la revendication 3, **caractérisé en ce que** le film fonctionnel (14) comporte plusieurs zones (C1,C2,C3,C4) correspondant à une pluralité de fonctions qui sont soit disposées les unes à côté des autres, soit se recouvrent ou se chevauchent partiellement, sans recouvrir les zones de transparence (11).

22. Dispositif d'affichage (1) selon l'une des revendications 3 à 21, **caractérisé en ce qu'**il est apte à afficher sur l'écran (3) une liste de fonctions disponibles, et **en ce qu'**il comporte une commande pour la sélection par un utilisateur d'une seule fonction dans la liste, ou simultanément de plusieurs fonctions dans la liste.

23. Dispositif d'affichage (1) selon la revendication 22, **caractérisé en ce que** ladite commande de sélection de fonction utilise la fonction tactile de l'écran.

24. Dispositif d'affichage (1) selon l'une quelconque des revendications précédentes **caractérisé en ce que** les informations captées ou transmises par les éléments fonctionnels (10) sont soit transmises à l'opérateur par un message à l'écran et/ou transmises à l'opérateur par l'émission d'une information sonore ou électromagnétique, soit stockées dans une mémoire électronique.

25. Appareil, **caractérisé en ce qu'**il comporte au moins un dispositif d'affichage (1) selon l'une quelconque des revendications précédentes.

## Patentansprüche

1. Anzeigevorrichtung (1), umfassend mehrere Pixel (7), die ein Bild bilden, und eine optische Platte (4), die gegenüber dem Bild angeordnet ist und Transparenzbereiche (11) aufweist, die ausgelegt sind, das Licht, das von den Pixeln (7) kommt, zumindest teilweise durchzulassen, wobei die optische Platte ferner ein Netzwerk aus Linsen (9) umfasst, die gegenüber den Pixeln (7) angeordnet sind, um das Licht zu fokussieren, das von den Pixeln (7) durch die Transparenzbereiche (11) abgegeben wird, **dadurch gekennzeichnet, dass**:
- die optische Platte (4) ferner mindestens ein Netzwerk aus Funktionselementen (10) aufweist, die für sichtbares Licht nicht transparent sind, die in Form von Sensoren oder Wandlern ausgebildet sind, die einer elektronischen und/oder mechanischen Funktion entsprechen, und
- die Funktionselemente (10) zwischen den Transparenzbereichen (11) eingefügt sind und so angeordnet sind, dass das Licht, das von den Pixeln (7) abgegeben wird, so geleitet wird, dass es die Transparenzbereiche (11) durchquert, ohne die Netzwerke aus Funktionselementen (10) abzufangen, so dass die Netzwerke aus Funktionselementen (10) für einen Betrachter der Anzeigevorrichtung (1) unsichtbar oder beinahe unsichtbar gemacht werden, obwohl sie nicht transparent sind.

2. Anzeigevorrichtung (1) nach Anspruch 1, **dadurch gekennzeichnet, dass** jedes Netzwerk aus Funktionselementen (10) in Form einer elektronischen und/oder mechanischen Funktionsfolie (14) ausgebildet ist, deren Funktion gewollt durch den Benutzer oder automatisch aufgrund des Empfangs einer physikalischen Größe, die aus der Umgebung kommt, oder aufgrund der Abgabe einer physikalischen Größe an die Umgebung ausgeführt wird.

3. Anzeigevorrichtung (1) nach einem der vorhergehenden Ansprüche, **dadurch gekennzeichnet, dass** die Funktionselemente (10) aus Sensoren und/oder Wandlern gebildet sind, die ausgelegt sind, eine oder mehrere Funktionen aus folgenden zu erfüllen:
- Funktion einer Antenne zum Senden und/oder Empfangen elektromagnetischer Wellen;
- Berührungsfunktion des Erkennens von Kontakt und Positionierung eines Fingers oder Stylus auf der Oberfläche der optischen Platte;
- Temperatursensorfunktion;
- eine Funktion eines optischen Sensors, der in der Lage ist, Licht zu Photovoltaikelementen oder Mitteln für die biometrische Erkennung umzuleiten;
- Mikrofonfunktion;
- Funktion einer Batterie zum Speichern elektrischer Energie;
- Funktion des Erkennens metallischer Gegenstände;
- Funktion des Erkennens von Ionisationsstrahlungen;
- Funktion des Erkennens von Magnetfeldern;

4. Anzeigevorrichtung (1) nach Anspruch 1, **dadurch gekennzeichnet, dass** das Netzwerk aus Linsen (9) der optischen Platte (4) in Form einer linsenförmigen Folie (9), die zwischen der Ebene der Pixel (7) und der Funktionsfolie (14) positioniert ist, ausgebildet ist.

5. Anzeigevorrichtung (1) nach Anspruch 4, **dadurch gekennzeichnet, dass** das Netzwerk aus Linsen (9) der optischen Platte (4) in Form einer linsenförmigen Folie (9) ausgebildet ist, und dadurch, dass die Funktionsfolie (14), die mit den Funktionselementen (10) versehen ist, zwischen den Pixeln (7) und der linsenförmigen Folie (9) positioniert ist.

6. Anzeigevorrichtung (1) nach Anspruch 4, **dadurch gekennzeichnet, dass** die Funktionselemente (10) nicht transparent sind und durch Transparenzbereiche (11) beabstandet sind, die gegenüber den Linsen (9) angeordnet sind, wobei diese zwischen den Transparenzbereichen (11) und den Pixeln (7) positioniert sind, um das Licht, das aus einem oder mehreren Pixeln (7) kommt, zu den Transparenzbereichen (11) zu fokussieren, und es zwischen Funktionselementen (10) zu dem Betrachter der Anzeigevorrichtung zu führen.

7. Anzeigevorrichtung (1) nach Anspruch 4, **dadurch gekennzeichnet, dass** die Funktionselemente (10) nicht transparent sind und durch Transparenzbereiche (11) beabstandet sind, die gegenüber den Linsen (9) angeordnet sind, wobei diese über den Funktionselementen (10) positioniert sind, um das Licht, das von einem oder mehreren Pixeln (7) kommt, durch die Transparenzbereiche (11) und die Linsen (9) zu führen, und es zu dem Betrachter der Anzeigevorrichtung zu leiten.

8. Anzeigevorrichtung (1) nach Anspruch 3, **dadurch gekennzeichnet, dass** zum Realisieren der Berührungsfunktion des Erkennens von Kontakt die Funktionselemente (10) Berührungssensoren sind, die aus Drähten aus einem nicht lichttransparenten Material, die elektrisch leitend sind, gebildet sind.

9. Anzeigevorrichtung (1) nach Anspruch 8, **dadurch gekennzeichnet, dass** die elektrisch leitenden Drähte untereinander isoliert sind und in einem Netzwerk angeordnet sind, dessen Schnittpunkte kapazitive oder resistive Knoten bilden, die in der Lage sind, ein berührungsempfindliches Netzwerk zu bilden, so dass beim Annähern eines Fingers oder Stylus an einen Knoten des Netzwerks dessen Position auf der Anzeigevorrichtung ermittelt wird.

10. Anzeigevorrichtung (1) nach Anspruch 3, **dadurch gekennzeichnet, dass** die Funktionselemente (10) in Form einer Antenne zum Senden und/oder Empfangen elektromagnetischer Wellen ausgelegt sind, wobei die Antenne mit Frequenzen arbeitet, welche die der RFID-Funkidentifikationsvorrichtungen sind.

11. Anzeigevorrichtung (1) nach Anspruch 3, **dadurch gekennzeichnet, dass** die Funktionselemente (10) in Form einer Antenne zum Senden und/oder Empfangen elektromagnetischer Wellen ausgelegt sind, die mit elektromagnetischen Frequenzen arbeitet, die auf die Funktionsfrequenzen des menschlichen Gehirns abgestimmt sind.

12. Anzeigevorrichtung (1) nach Anspruch 10 oder 11, **dadurch gekennzeichnet, dass** die Antenne zum Senden und/oder Empfangen entweder von einer Batterie oder einer photovoltaischen Zelle versorgt wird, oder durch die Energie der elektromagnetischen Wellen, die sie empfängt, eigenversorgt wird.

13. Anzeigevorrichtung (1) nach Anspruch 3, wobei die Funktionselemente (10) in Form eines Temperatursensors ausgelegt sind, **dadurch gekennzeichnet, dass** die Funktionsfolie (14) Thermoelemente aufweist, die aus mindestens zwei elektrischen Leitern unterschiedlicher chemischer Formeln gebildet sind, die mindestens zwei Übergänge untereinander bilden.

14. Anzeigevorrichtung (1) nach Anspruch 3, wobei die Funktionselemente (10) in Form eines Mikrofons ausgelegt sind, **dadurch gekennzeichnet, dass** die Funktionsfolie (14) eine piezoelektrische Folie ist, die vorzugsweise aus Blei-Zirkonat-Titanat (PZT) gebildet ist.

15. Anzeigevorrichtung (1) nach Anspruch 3, wobei die Funktionselemente (10) in Form einer Batterie zum Speichern elektrischer Energie ausgelegt sind, **dadurch gekennzeichnet, dass** die Funktionsfolie (14) aus mindestens drei dünnen Schichten gebildet ist, die übereinandergestapelt sind und jeweils die Funktion einer Anode, einer Kathode und eines Festelektrolyten innehaben, wobei dieser Festelektrolyt vorzugsweise Lithium enthält.

16. Anzeigevorrichtung (1) nach Anspruch 3, wobei die Funktionselemente (10) zur Erkennung metallischer Gegenstände ausgelegt sind, **dadurch gekennzeichnet, dass** die Funktionsfolie (14) induktive Wirbelstromsensoren aufweist, die aus einer Schaltung aus Drähten gebildet sind, die von einer sinusförmigen Spannung durchflossen werden.

17. Anzeigevorrichtung (1) nach Anspruch 3, wobei die Funktionselemente (10) zur Erkennung von Ionisationsstrahlungen ausgelegt sind, **dadurch gekennzeichnet, dass** die Funktionsfolie (14) Halbleiter aufweist, deren Übergang oder Übergänge dank eines elektrischen Felds, das an die Anschlüsse angelegt ist, in Rückwärtsrichtung polarisiert sind, wobei die Halbleiter vorzugsweise Silizium mit Zusatz von Lithium oder Kadmiumtellurid (CdTe und CdZnTe), oder ein undotierter Bereich, der zwischen zwei Kontakten aus p-i-n-dotierten Halbleitern eingefügt ist, oder ein Metall-Halbleiter-Metall-Übergang sind.

18. Anzeigevorrichtung (1) nach einem der vorhergehenden Ansprüche, **dadurch gekennzeichnet, dass** die Pixel (7) entweder durch eine rückwärtige Beleuchtungsvorrichtung (2) hinterleuchtet, elektrolumineszent oder in der Lage sind, das auftreffende Licht zu reflektieren.

19. Anzeigevorrichtung (1) nach einem der Ansprüche 1 oder 4, **dadurch gekennzeichnet, dass** die Linsen (9) konvergierend oder divergierend, symmetrisch oder asymmetrisch, sphärisch oder asphärisch, aus Mineralglas oder organischem Glas sind.

20. Anzeigevorrichtung (1) nach einem der Ansprüche 1 oder 4, **dadurch gekennzeichnet, dass** die Linsen (9) durch Prismen ersetzt sind.

21. Anzeigevorrichtung (1) nach Anspruch 2 oder 3, **dadurch gekennzeichnet, dass** die Funktionsfolie (14) mehrere Bereiche (C1,C2,C3,C4) aufweist, die mehreren Funktionen entsprechen, die entweder nebeneinander angeordnet sind oder sich teilweise überdecken oder überlappen, ohne die Transparenzbereiche (11) zu überdecken.

22. Anzeigevorrichtung (1) nach einem der Ansprüche 3 bis 21, **dadurch gekennzeichnet, dass** sie in der Lage ist, auf dem Bildschirm (3) eine Liste verfügbarer Funktionen anzuzeigen, und dadurch, dass sie einen Befehl für die Auswahl einer einzigen Funktion in der Liste oder mehrerer Funktionen gleichzeitig in der Liste durch einen Benutzer umfasst.

23. Anzeigevorrichtung (1) nach Anspruch 22, **dadurch gekennzeichnet, dass** der Funktionsauswahlbefehl die Berührungsfunktion des Bildschirms nutzt.

24. Anzeigevorrichtung (1) nach einem der vorhergehenden Ansprüche, **dadurch gekennzeichnet, dass** die Informationen, die von den Funktionselementen (10) erfasst oder übermittelt werden, entweder durch eine Bildschirmnachricht an den Bediener übermittelt und/oder durch die Abgabe einer akustischen oder elektromagnetischen Information an den Bediener übermittelt oder in einem elektronischen Speicher gespeichert werden.

25. Gerät, **dadurch gekennzeichnet, dass** es mindestens eine Anzeigevorrichtung (1) nach einem der vorhergehenden Ansprüche aufweist.

## Claims

1. Display device (1) comprising a plurality of pixels (7) forming an image, and an optical plate (4) arranged facing the image and including areas of transparency (11) configured to allow at least part of the light from the pixels (7) to pass, said optical plate also including a network of lenses (9) arranged facing the pixels (7) so as to focus the light emitted by the pixels (7) through said areas of transparency (11), **characterized in that**:
- said optical plate (4) also comprises at least one network of functional elements (10) which are not transparent to the visible light and that are produced in the form of sensors or transducers corresponding to an electronic and/or mechanical function, and
- said functional elements (10) are inserted between the areas of transparency (11) and arranged in such a way that the light emitted by the pixels (7) is directed to pass through the areas of transparency (11) without intercepting the networks of functional elements (10), so as to render said networks of functional elements (10) invisible or quasi-invisible to an observer of the display device (1), although they are non-transparent.

2. Display device (1) according to Claim 1, **characterized in that** each network of functional elements (10) is produced in the form of an electronic and/or mechanical functional film (10) whose function is implemented deliberately by the user, or automatically because of the reception of a physical quantity from the medium or because of the emission of a physical quantity to the medium.

3. Display device (1) according to either one of the preceding claims, **characterized in that** said functional elements (10) consist of sensors and/or transducers configured to fulfill one or more of the functions taken from the following:
- the antenna function for emitting and/or receiving electromagnetic waves;
- the touch function for detecting contact and positioning of a finger or a stylus on the surface of the optical plate;
- the temperature sensor function;
- an optical sensor function suitable for redirecting the light to photovoltaic elements or biometric recognition means;
- the microphone function;
- the electrical energy storage battery function;
- the metallic object detection function;
- the ionizing radiation detection function;
- the magnetic field detection function.

4. Display device (1) according to Claim 1, **characterized in that** the network of lenses (9) of the optical plate (4) is produced in the form of a lenticular film (9) positioned between the plane of the pixels (7) and the functional film (14).

5. Display device (1) according to Claim 4, **characterized in that** the network of lenses (9) of the optical plate (4) is produced in the form of a lenticular film (9) and **in that** the functional film (14) provided with the functional elements (10) is positioned between the pixels (7) and said lenticular film (9).

6. Display device (1) according to Claim 4, **characterized in that** said functional elements (10) are non-transparent and spaced apart by areas of transparency (11) arranged facing the lenses (9), the latter being positioned between the areas of transparency (11) and the pixels (7) so as to focus the light from one or more pixels (7) toward the areas of transparency (11) and to guide it between functional elements (10) toward the observer of the display device.

7. Display device (1) according to Claim 4, **characterized in that** said functional elements (10) are non-transparent and spaced apart by areas of transparency (11) arranged facing the lenses (9), the latter being positioned above said functional elements (10) so as to guide the light from one or more pixels (7) through the areas of transparency (11) and the lenses (9) and to direct it toward the observer of the display device.

8. Display device (1) according to Claim 3, **characterized in that**, to produce the contact detection touch function, the functional elements (10) are touch sensors consisting of wires that are made of a material that is not transparent to the light and that are electrically conductive.

9. Display device (1) according to Claim 8, **characterized in that** said electrically conductive wires are insulated from one another and are arranged as a network whose intersections constitute capacitive or resistive nodes suitable for forming a touch network, such that, when a finger or a stylus approaches a node of the network, its position is identified on the display device.

10. Display device (1) according to Claim 3, **characterized in that** said functional elements (10) are configured in the form of an antenna for emitting and/or receiving electromagnetic waves, and the antenna operating with frequencies which are those of the radiofrequency identification RFID devices.

11. Display device (1) according to Claim 3, **characterized in that** said functional elements (10) are configured in the form of an antenna for emitting and/or receiving electromagnetic waves operating with electromagnetic frequencies tuned to the operating frequencies of the human brain.

12. Display device (1) according to Claim 10 or Claim 11, **characterized in that** the emitting and/or receiving antenna is either powered by a battery or a photovoltaic cell, or self-powered by the energy of the electromagnetic waves that it receives.

13. Display device (1) according to Claim 3, in which said functional elements (10) are configured in the form of a temperature sensor, **characterized in that** the functional film (14) comprises thermocouples consisting of at least two electrical conductors of different chemical formulae which form at least two junctions between them.

14. Display device (1) according to Claim 3, in which said functional elements (10) are configured in the form of a microphone, **characterized in that** the functional film (14) is a piezoelectric film preferably consisting of lead zirconate titanate (LZT).

15. Display device (1) according to Claim 3, in which said functional elements (10) are configured in the form of an electrical energy storage battery, **characterized in that** the functional film (14) consists of at least three thin layers stacked one on top of the other and respectively having the anode, cathode and solid electrolyte functions, this solid electrolyte preferably containing lithium.

16. Display device (1) according to Claim 3, in which said functional elements (10) are configured to detect metallic objects, **characterized in that** the functional film (14) comprises inductive sensors with eddy currents consisting of a circuit of wires passed through by a sinusoidal voltage.

17. Display device (1) according to Claim 3, in which said functional elements (10) are configured to detect ionizing radiation, **characterized in that** the functional film (14) comprises semiconductors whose junction or junctions are reverse biased by virtue of an electrical field applied to the terminals, said semiconductors preferably being silicon with the addition of lithium or of cadmium telluride (CdTe and CdZnTe), or a non-doped area inserted between two contacts with p-i-n doped semiconductors, or a metal-semiconductor-metal junction.

18. Display device (1) according to any one of the preceding claims, **characterized in that** the pixels (7) are either backlit by a rear lighting device (2), or light-emitting, or suitable for reflecting the incident light.

19. Display device (1) according to either one of Claims 1 and 4, **characterized in that** the lenses (9) are convergent or divergent, symmetrical or asymmetrical, spherical or aspherical, made of mineral glass or of organic glass.

20. Display device (1) according to either one of Claims 1 and 4, **characterized in that** the lenses (9) are replaced by prisms.

21. Display device (1) according to Claim 2 or Claim 3, **characterized in that** the functional film (14) comprises a plurality of areas (C1, C2, C3, C4) corresponding to a plurality of functions which are either arranged alongside one another, or cover one another or partially overlap, without covering the areas of transparency (11).

22. Display device (1) according to one of Claims 3 to 21, **characterized in that** it is suitable for displaying on the screen (3) a list of available functions, and **in that** it comprises a command for a user to select a single function from the list, or several functions simultaneously from the list.

23. Display device (1) according to Claim 22, **characterized in that** said function selection command uses the touch function of the screen.

24. Display device (1) according to any one of the preceding claims, **characterized in that** the information picked up or transmitted by the functional elements (10) is either transmitted to the operator via a message on the screen and/or transmitted to the operator by the emission of audible or electromagnetic information, or stored in an electronic memory.

25. Appliance, **characterized in that** it comprises at least one display device (1) according to any one of the preceding claims.
